# FASCICULE DE BREVET EUROPEEN

(11) **EP 2 051 206 B1**
(45) Date de publication et mention de la délivrance du brevet: **18.08.2010**
(21) Numéro de dépôt: 08166479.9
(22) Date de dépôt: 13.10.2008
(51) Int. Cl.: G06T 7/00

(54) **Procédé de détermination automatique du coefficient d'une pente sur le point d'être abordée par un véhicule automobile, et dispositif associé**
Verfahren zur automatischen Bestimmung des Koeffizienten einer Steigung am jeweiligen Angriffspunkt durch ein Kraftfahrzeug, und entsprechende Vorrichtung
Method for automatically determining the gradient of a slope about to be entered by an automobile, and associated device

(30) Priorité: 17.10.2007 FR 0707309
(43) Date de publication de la demande: 22.04.2009
(73) Titulaire: VALEO VISION, 93012 Bobigny (FR)
(72) Inventeur: Fleury, Benoist, 94300 Vincennes (FR); Moizard, Julien, 75012 Paris (FR); Charpentier, Adrien, 70180 Stuttgart (DE)

(56) Documents cités:
- US-A1- 2002 087 253
- US-B1- 6 963 657
- BERTOZZI M ET AL: "AN EXTENSION TO THE INVERSE PERSPECTIVE MAPPING TO HANDLE NON-FLAT ROADS" PROCEEDINGS OF THE IEEE INTERNATIONAL CONFERENCE ON INTELLIGENTVEHICLE, XX, XX, 28 octobre 1998 (1998-10-28), pages 305-310, XP008052531

## Description

La présente invention a pour objet un procédé de détermination automatique du coefficient d'une pente sur le point d'être empruntée par un véhicule automobile. L'invention a également pour objet un dispositif apte à mettre en oeuvre un tel procédé.

Le procédé selon l'invention offre la possibilité d'anticiper l'arrivée d'un véhicule sur une pente, qu'elle soit de type côte ou descente, en en calculant le coefficient de pente, afin d'optimiser certaines caractéristiques du véhicule pour mieux appréhender ladite pente ; ces caractéristiques sont par exemple celles du régime moteur, ou de l'inclinaison du faisceau lumineux.

Le domaine de l'invention est, d'une façon générale, celui des systèmes avancés d'aide à la conduite ; dans ce domaine, on connait notamment des dispositifs de détection d'obstacles, des dispositifs de vision de nuit, des dispositifs d'anticipation d'arrivée dans des virages, des dispositifs d'optimisation des faisceaux lumineux utilisés en fonction du trafic routier... Ces dispositifs utilisent tous des capteurs qui peuvent être de nature différente. Les solutions proposées sont essentiellement basées sur des technologies radar, lidar, ultrasons notamment pour la détection à basse vitesse d'obstacles proches, et également sur des procédés faisant intervenir des dispositifs de type caméras.

Le brevet américain US 2002/0087253 décrit un procédé de détermination de la pente d'une route basée sur l'analyse d'une image acquise par une caméra embarquée sur un véhicule. L'image est tout d'abord déformée selon une projection de type "bird's view", puis les lignes de marquage latérales sont détectées de part et d'autre du véhicule. Une différence d'orientation de ces lignes indique la présence d'une pente et permet de calculer son coefficient.

Les capteurs de type radar et lidar, typiquement utilisés en application à détection lointaine comme l'ACC (pour Autonomous Cruise Control en langue anglaise) par exemple, fournissent directement une information de position et parfois de vitesse 2D des objets présents dans une scène de route. Cette information permet de segmenter les différents objets présents et de leur attribuer des informations utiles comme leur position, éventuellement leur vitesse, avec leurs coordonnées réelles en deux dimensions, par rapport au véhicule équipé du capteur considéré, et par rapport à un repère fixe, si la position du véhicule est bien déterminée dans ce repère.

Mais de tels capteurs n'offrent pas de champ de vision large, et leur positionnement angulaire n'est jamais très précis. Par ailleurs, de tels capteurs n'apportent aucune information sur l'environnement routier, telle que la position de véhicule sur sa voie, le nombre de voies, la trajectoire de la route, la classification des obstacles, la reconnaissance des éléments de l'infrastructure tels que les panneaux...

En conséquence, de nombreux dispositifs d'aide à la conduite utilisent des caméras, collaborant le plus souvent avec des algorithmes de traitement d'images spécifiques aux fonctions qu'ils réalisent. Le dispositif selon l'invention appartient à ce type de dispositifs.

Le problème que cherche à résoudre l'invention est le suivant : actuellement, il n'existe aucune prise en compte, en matière d'optimisation de caractéristiques fonctionnelles du véhicule automobile, de l'arrivée sur une pente du véhicule considéré. Or de nombreuses caractéristiques pourraient être améliorées.

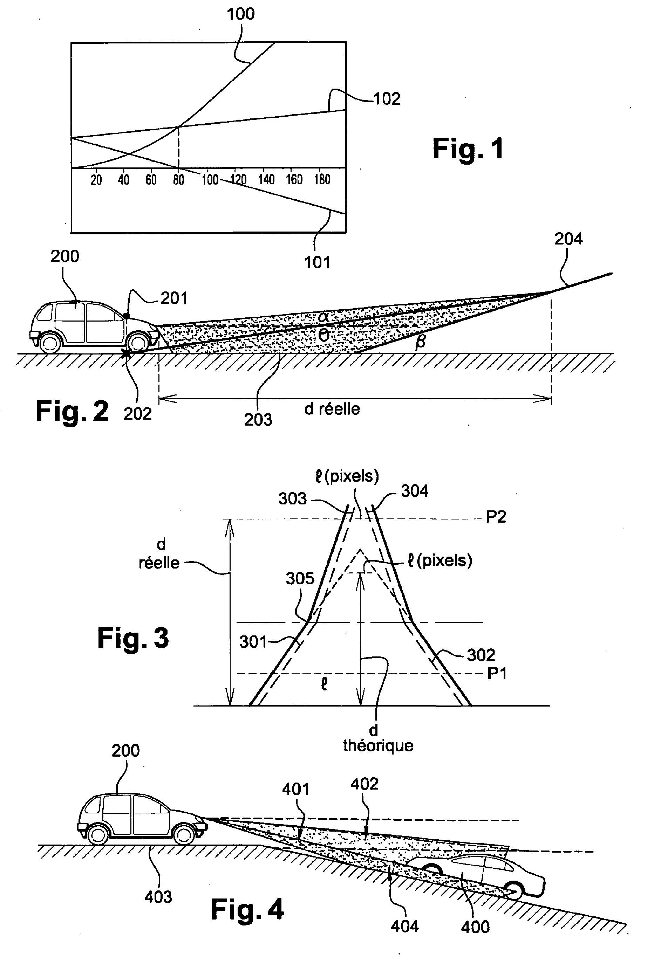

Par exemple, comme illustré à la figure 1, en matière d'éclairage de la route l'apparition d'une pente modifie la portée du faisceau lumineux produit par le véhicule, modification qui peut s'avérer perturbante pour le conducteur. Sur cette figure, on constate que lorsqu'un véhicule se dirige vers une côte 100, la portée du faisceau lumineux qu'il produit diminue en se rapprochant de ladite côte : ainsi, dans l'exemple illustré, pour un faisceau lumineux capable d'éclairer à 80 mètres lorsque le véhicule circule sur une route plate, la portée de l'éclairage est ramenée à environ 40 mètres, comme illustré par une première droite 101, correspondant à la limite supérieure du faisceau lumineux produit par le véhicule. Pour retrouver, en considérant la côte 100, une portée d'éclairage de 80 mètres, représenté par une deuxième droite 102, il est nécessaire de modifier l'orientation des dispositifs projecteurs créant le faisceau considéré.

Un autre exemple de caractéristiques pouvant être améliorées réside dans la stratégie d'alimentation du moteur en carburant : par exemple, pour maintenir une vitesse constante lorsqu'une côte est abordée, il est nécessaire que le moteur d'un véhicule consomme plus de carburant que dans des conditions de circulation planes. Si la montée de la côte n'est pas anticipée par une stratégie d'alimentation du moteur appropriée, la vitesse du véhicule diminuera lorsque la montée débutera, ce qui nuit au confort de conduite.

En conséquence, l'absence d'anticipation de la présence d'une pente est susceptible de nuire au confort de conduite.

L'objet de l'invention propose une solution aux problèmes qui viennent d'être exposés. La présente invention a ainsi pour objet d'anticiper la présence d'une pente sur le point d'être empruntée par un véhicule automobile. A cet effet, on propose, dans l'invention, un procédé permettant de déterminer l'angle de la route empruntée par le véhicule. Ainsi, en présence d'une pente, on connait précisément, grâce au procédé selon l'invention, l'inclinaison de la pente, également appelé coefficient de pente. La connaissance d'une telle information permet alors d'adapter de différentes caractéristiques du véhicule, par exemple l'orientation des faisceaux lumineux ou la stratégie de consommation en carburant par le moteur, de manière à apporter un confort de conduite optimisé.

L'invention concerne donc essentiellement un procédé de détermination automatique du coefficient d'une pente sur le point d'être abordée par un véhicule automobile équipé d'une caméra réalisant une opération d'acquisition d'au moins une image d'une scène de route se déroulant devant ledit véhicule, ledit procédé comportant les différentes étapes consistant à :
- détecter, sur une image acquise par la caméra, un premier repère, d'un type de repère considéré présentant une forme globalement allongée et étant répété sur la longueur de la route, ledit premier repère étant présent au niveau d'une première position et étant constitué d'au moins un premier élément et d'un deuxième élément situés de part et d'autre de la route et à proximité du véhicule ;
- détecter, à une distance éloignée du véhicule, un deuxième repère du type de repère considéré, le deuxième repère étant présent, au niveau d'une deuxième position, de part et d'autre de la route;
- déterminer, au moyen d'une application de traitement d'images, l'existence d'un changement d'orientation entre l'orientation du premier repère et l'orientation du deuxième repère ;
- le cas échéant, c'est-à-dire si l'existence d'un changement d'orientation a été déterminée, déduire du changement d'orientation constaté la présence d'une pente et calculer, à partir de caractéristiques du changement d'orientation constaté, le coefficient de ladite pente.

Outre les caractéristiques principales qui viennent d'être mentionnées dans le paragraphe précédent, le procédé selon l'invention peut présenter une ou plusieurs caractéristiques supplémentaires parmi les suivantes :
- le type de repère considéré consiste en des marquages au sol.
- le type de repère considéré consiste en des bords de route ;
- l'étape consistant à calculer le coefficient de la pente comporte l'opération consistant à considérer la route plate au niveau du premier repère ;
- l'étape consistant à calculer le coefficient de la pente comporte l'opération consistant à considérer la largeur de la route constante entre la première position et la deuxième position ;
- la deuxième position est située au niveau d'une distance maximale de détection par la caméra ;
- l'étape consistant à calculer le coefficient de la pente comporte les différentes opérations consistant à :
   - calculer la distance du premier repère à partir de sa position verticale dans l'image en considérant la route plate entre le véhicule et le premier repère ;
   - déterminer, sur l'image capturée, un nombre de pixels présents entre le premier élément et le deuxième élément du premier repère ;
   - déduire du nombre de pixels déterminés et de la distance du premier repère la largeur de la route ;
   - déterminer la largeur en pixels de la route au niveau de la deuxième position ;
   - considérer la largeur de la route comme constante entre la première position et la deuxième position ;
   - déduire, de la largeur de la route déterminée en pixels, l'éloignement réel entre la deuxième position et le véhicule ;
   - compter, en pixels, la hauteur dans l'image capturée, ou éventuellement dans une autre image acquise par la caméra, à laquelle se situe la deuxième position ;
   - déduire de l'opération précédente un éloignement théorique entre la deuxième position et le véhicule, correspondant à l'hypothèse d'une route plate, entre la deuxième position et le véhiculé
   - déduire d'une différence entre l'éloignement réel et l'éloignement théorique le coefficient de la pente entre un point particulier de la route, correspondant à la projection au sol de la position de la caméra équipant le véhicule, et la deuxième position.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre du procédé de l'invention.

La présente invention se rapporte également à un dispositif d'aide à la conduite, embarqué au sein d'un véhicule, apte à mettre en oeuvre le procédé selon l'une au moins des revendications précédentes, **caractérisé en ce qu**'il comporte :
- une caméra réalisant une opération d'acquisition d'au moins une image d'une scène de route se déroulant devant ledit véhicule ;
- des moyens de traitement d'image pour détecter :
- un premier repère présent au niveau d'une première position et étant constitué d'au moins un premier élément et d'un deuxième élément situés de part et d'autre de la route et à proximité du véhicule ;
- un deuxième repère, présent au niveau d'une deuxième position éloignée du véhicule, du même type que le premier repère ;
- des moyens de calcul pour calculer, à partir de caractéristiques d'un changement d'orientation constaté, le cas échéant, entre le premier repère et le deuxième repère, le coefficient de la pente entre la deuxième position et un point particulier de la route, le point particulier correspondant à la projection au sol de la position de la caméra équipant le véhicule ;
et le dispositif selon l'invention comportant :
- soit des moyens de contrôle de l'orientation d'un faisceau lumineux, lesdits moyens de contrôle interprétant l'information de coefficient de pente pour ajuster l'orientation du faisceau ;
- soit des moyens de contrôle de l'alimentation du moteur du véhicule, lesdits moyens de contrôle interprétant l'information de coefficient de pente pour ajuster une alimentation en carburant du moteur.

La présente invention se rapporte également à un véhicule automobile équipé d'un des dispositifs d'aide à la conduite selon l'invention.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, déjà décrite, une représentation schématique d'un exemple de problème se posant lors de l'arrivée d'un véhicule sur une côte ;
- à la figure 2, une représentation schématique d'un véhicule sur le point d'emprunter une côte, avec différents paramètres intervenant dans un exemple de mise en oeuvre du procédé selon l'invention ;
- à la figure 3, une représentation schématique de la route en montée sur le point d'être empruntée par un véhicule, avec différentes caractéristiques intervenant dans la mise en ouvre du procédé selon l'invention ;
- à la figure 4, une représentation schématique d'un véhicule sur le point d'emprunter une descente, mettant en oeuvre le procédé selon l'invention.

Les figures illustrent, de façon non limitative, un exemple de mise en oeuvre du procédé selon l'invention dans lequel le procédé de détermination d'un coefficient de pente est exploité pour régler l'orientation d'un faisceau lumineux produit par un dispositif projecteur du véhicule. D'autres applications du procédé selon l'invention sont cependant envisagées. Toute caractéristique présente sur plusieurs figures conserve, sauf précision contraire, la même référence.

Un exemple de mise en oeuvre du procédé selon l'invention, illustré au moyen des figures 2 et 3, est le suivant :

La figure 2 montre un véhicule 200 embarquant une caméra 201 circulant sur une route 203 et sur le point d'aborder une côte 204. La figure 3 montre schématiquement, selon une autre vue, correspondant à la scène de route filmée par la caméra 201, la route 203, en y faisant apparaître différents paramètres intervenant dans un exemple de mise en oeuvre du procédé selon l'invention.

Un exemple de mise en oeuvre du procédé selon l'invention, illustré au moyen des figures 2 et 3, est le suivant :

Dans une première étape, des repères présents sur la route 202 sont détectés, sur une image capturée par la caméra 201, par un algorithme quelconque de reconnaissance de formes par traitement d'images. On repère ainsi, au niveau d'une première position P1, un premier repère, constitué d'un premier élément 301 et d'un deuxième élément 302, le premier élément 301 et le deuxième élément 302 étant disposés de part et d'autre de la route 203, et étant de forme allongée selon une direction globalement parallèle au sens de déplacement du véhicule 200. Avantageusement, le premier repère est disposé à proximité du véhicule, par exemple à une dizaine de mètres. Avec les mêmes moyens, on repère également, au niveau d'une deuxième position P2 repérée sur la route 203, un deuxième repère, également constitué d'un premier élément 303 et d'un deuxième élément 304, du même type que les éléments du premier repère. Avantageusement, le deuxième repère est disposé au niveau d'une distance correspondant aux capacités maximales de détection de la caméra 201, typiquement 50 mètres. La portée de la détection garantit une grande précision dans le calcul de la pente au moins jusqu'à une distance correspondant à cette portée de détection.

Avantageusement, les éléments constituant les repères sont du type bande de marquage au sol : leur présence répétée tout au long de la route 203, ainsi que leur forme allongée, vont permettre de détecter la présence d'une pente : en effet, dans un tel cas, l'orientation, sur l'image capturée, des bandes de marquage subit une modification entre les bandes disposées sur la zone plate de la route, et les bandes disposées sur la pente 204.

Avantageusement, on fait l'hypothèse réaliste que, à courte distance, et donc au niveau de la première position P1, la route est plate. On peut alors déterminer la distance de ce premier repère à partir de sa position verticale dans l'image et procéder, dans une deuxième étape, au comptage du nombre de pixels présents entre les deux éléments 301 et 302, pour convertir ce nombre de pixels en unité métrique, et déterminer ainsi la largeur l de la route 203.

Dans une étape suivante, on procède à la détermination de la largeur de la route, exprimée en pixels, lₚᵢₓₑₗₛ, au niveau de la deuxième position P2. En considérant que la largeur de la route 203 est constante entre la première position P1 et la deuxième position P2, on déduit alors, à partir du nombre de pixels comptés au niveau de la deuxième position P2, un éloignement réel d_{réel}.

Dans une étape suivante, on détermine, en nombre de pixels, la hauteur dans l'image capturée de la deuxième position P2. On en déduit alors un éloignement théorique d_{théorique} qui aurait été observé entre le véhicule et la deuxième position P2 si la route était plane entre la première position P1 et la deuxième position P2.

L'existence d'une différence entre les valeurs de l'éloignement théorique et de l'éloignement réel permet de conclure à l'existence d'un changement d'orientation 305 entre l'orientation du premier repère et l'orientation du deuxième repère, et donc à la présence d'une pente. L'éloignement théorique et l'éloignement réel constituent ici les caractéristiques du changement d'orientation entre le premier repère et le deuxième repère qui permettent le calcul du coefficient de la pente 204. La différence entre l'éloignement théorique et l'éloignement réel permet en effet, à partir de formules trigonométriques basiques, de déterminer la pente moyenne θ entre un point du sol 202, correspondant à la projection de la position de la caméra 201 sur le sol, et la deuxième position P2. Par extension, on assimile l'angle θ à un angle β correspondant effectivement au coefficient directeur de la pente 204.

Les différentes opérations intervenant dans le procédé décrit peuvent être réalisées à partir d'une image unique capturée par la caméra, ou sur des images acquises dans le temps, éventuellement successivement.

Pour une première application du procédé qui vient d'être décrit, permettant de maintenir constante une distance sur la route éclairée par un dispositif projecteur, on calcule, à partir de la pente moyenne θ, un angle α commandant les projecteurs et garantissant une portée de visibilité constante. Dans l'hypothèse où la deuxième position P2 est située à une distance inférieure à la portée recherchée pour le faisceau lumineux, on fait l'hypothèse que la pente moyenne demeure constante au-delà de la deuxième position P2 pour déterminer la valeur de l'angle α à appliquer pour éclairer sur la totalité de la portée recherchée.

Comme montré à la figure 4, le procédé selon l'invention peut également être utile dans le cas où la pente détectée est une descente 404 située dans le prolongement d'une route 403. Ainsi, on peut abaisser un faisceau lumineux initial 402 pour générer un faisceau modifié 401 qui n'est plus susceptible d'éblouir le conducteur d'un véhicule croisé 400 évoluant sur la pente 404.

Dans une autre application du procédé qui vient d'être décrit, on anticipe la présence d'une pente pour l'élaboration d'une stratégie d'alimentation du moteur en carburant afin d'optimiser les performances de celui-ci lorsque le véhicule aborde la pente. Par exemple, la quantité de carburant fournie au moteur peut être corrélée à la pente moyenne θ déterminée.

## Revendications

1. Procédé de détermination automatique du coefficient (θ) d'une pente (204 ; 404) sur le point d'être abordée par un véhicule automobile (200) équipé d'une caméra (201) réalisant une opération d'acquisition d'au moins une image d'une scène de route (203) se déroulant devant ledit véhicule, comportant les différentes étapes consistant à :
- détecter, sur une image acquise par la caméra, un premier repère, d'un type de repère considéré présentant une forme globalement allongée et étant répété sur la longueur de la route, ledit premier repère étant présent au niveau d'une première position (P1) et étant constitué d'au moins un premier élément (301) et d'un deuxième élément (302) situés de part et d'autre de la route et à proximité du véhicule ;
**caractérisé en ce qu'**il comporte les étapes:
- détecter, à une distance plus éloignée que le premier repère du véhicule, un deuxième repère du type de repère considéré, le deuxième repère étant présent, au niveau d'une deuxième position (P2), de part et d'autre de la route (203);
- déterminer, au moyen d'une application de traitement d'images, l'existence d'un changement (305) d'orientation entre les orientations des éléments (301;302) du premier repère et les orientations des éléments (303;304) du deuxième repère;
- le cas échéant, déduire du changement d'orientation constaté la présence d'une pente (204) et calculer, à partir de caractéristiques du changement d'orientation constaté, le coefficient (θ) de ladite pente (203).

2. Procédé selon la revendication précédente **caractérisé en ce que** le type de repère considéré consiste en des marquages au sol.

3. Procédé selon la revendication 1 **caractérisé en ce que** le type de repère considéré consiste en des bords de route.

4. Procédé selon l'une au moins des revendications précédentes **caractérisé en ce que** l'étape consistant à calculer le coefficient (θ) de la pente (204 ; 404) comporte l'opération consistant à considérer la route (203) plate au niveau du premier repère (301 ; 302).

5. Procédé selon l'une au moins des revendications précédentes **caractérisé en ce que** l'étape consistant à calculer le coefficient (θ) de la pente (204 ; 404) comporte l'opération consistant à considérer la largeur (I) de la route constante entre la première position (P1) et la deuxième position (P2).

6. Procédé selon l'une au moins des revendications précédentes **caractérisé en ce que** la deuxième position (P2) est située au niveau d'une distance maximale de détection par la caméra (201).

7. Procédé selon l'une au moins des revendications précédentes **caractérisé en ce que** l'étape consistant à calculer le coefficient (θ) de la pente (204) comporte les différentes opérations consistant à :
- déterminer la distance du premier repère à partir de sa position verticale dans l'image en considérant la route plate au niveau du premier repère (P1);
- déterminer, sur l'image capturée, un nombre de pixels présents entre le premier élément (301) et le deuxième élément (302) du premier repère ;
- déduire du nombre de pixels déterminés et de la distance du premier repère la largeur (1) de la route (203);
- déterminer la largeur en pixels (lₚᵢₓₑₗₛ ) de la route au niveau de la deuxième position (P2);
- considérer la largeur de la route comme constante entre la première position (P1) et la deuxième position (P2);
- déduire, de la largeur de la route déterminée en pixels, un éloignement réel (d_{réel});
- compter, en pixels, la hauteur dans l'image capturée, à laquelle se situe la deuxième position ;
- déduire de l'opération précédente un éloignement théorique (d_{théorique}), correspondant à l'hypothèse d'une route plate, entre la deuxième position (P2) et le véhicule (200);
- déduire d'une différence entre l'éloignement réel (d_{réelle} ) et l'éloignement théorique (d_{théorique} ) le coefficient de la pente (θ) entre un point particulier (202) de la route, correspondant à la projection au sol de la position de la caméra (201) équipant le véhicule (200), et la deuxième position (P2).

8. Dispositif d'aide à la conduite, embarqué au sein d'un véhicule (200), apte à mettre en oeuvre le procédé selon l'une au moins des revendications précédentes,
comportant:
- une caméra (201) réalisant une opération d'acquisition d'au moins une image d'une scène de route (203) se déroulant devant ledit véhicule ;
- des moyens de traitement d'images pour détecter :
- un premier repère (301 ; 302) présent au niveau d'une première position (P1) et étant constitué d'au moins un premier élément (301) et d'un deuxième élément (302) situés de part et d'autre de la route (203) et à proximité du véhicule (200);
**caractérisé en ce qu'**il comporte :
- un deuxième repère (303 ;304), présent au niveau d'une deuxième position (P2) éloignée du véhicule (200), du même type que le premier repère ;
- des moyens de calcul pour calculer, à partir de caractéristiques d'un changement d'orientation constaté, le cas échéant, entre le premier repère et le deuxième repère, le coefficient (θ) de la pente (204 ; 404) entre la deuxième position (P2) et un point particulier (202) de la route, le point particulier correspondant à la projection au sol de la position de la caméra (201 ) équipant le véhicule ;
- des moyens de contrôle de l'orientation d'un faisceau lumineux (402) ou des moyens de contrôle de l'alimentation du moteur du véhicule, lesdits moyens de contrôle interprétant l'information de coefficient de pente (6) pour ajuster respectivement l'orientation du faisceau et une alimentation en carburant du moteur.

9. Véhicule automobile (200) **caractérisé en ce qu'**il est équipé du dispositif selon la revendication 8.

## Claims

1. Method for automatic determination of the coefficient (θ) of a slope (204; 404) which is about to be approached by a motor vehicle (200) equipped with a camera (201) carrying out an operation of acquisition of at least one image of a road scene (203) which exists in front of the said vehicle, comprising the different steps consisting of:
- detecting, on an image acquired by the camera, a first reference of the type considered which has a globally elongate form, and is repeated along the length of the road, the said first reference being present at the level of a first position (P1), and being constituted by at least a first element (301) and a second element (302) which are situated on both sides of the road and in the vicinity of the vehicle, **characterised in that** it comprises the steps of:
- detecting, at a distance from the vehicle which is further away than the first reference, a second reference of the type considered, the second reference being present at the level of a second position (P2), on both sides of the road (203);
- determining, by means of an image processing application, the existence of a change (305) of orientation between the orientations of the elements (301; 302) of the first reference and the orientations of the elements (303; 304) of the second reference; and
- if applicable, deducing the presence of a slope (204) from the change of orientation determined, and calculating on the basis of characteristics of the change of orientation determined, the coefficient (θ) of the said slope (203).

2. Method according to the preceding claim, **characterised in that** the type of reference considered consists of markings on the ground.

3. Method according to claim 1, **characterised in that** the type of reference considered consists of edges of the road.

4. Method according to at least one of the preceding claims, **characterised in that** the step consisting of calculating the coefficient (θ) of the slope (204; 404) comprises the operation consisting of considering the road (203) flat at the level of the first reference (301; 302).

5. Method according to at least one of the preceding claims, **characterised in that** the step consisting of calculating the coefficient (θ) of the slope (204; 404) comprises the operation consisting of considering the width (1) of the road constant between the first position (P1) and the second position (P2).

6. Method according to at least one of the preceding claims, **characterised in that** the second position (P2) is situated at the level of a maximum detection distance by the camera (201).

7. Method according to at least one of the preceding claims, **characterised in that** the step consisting of calculating the coefficient (θ) of the slope (204) comprises the different operations consisting of:
- determining the distance from the first reference on the basis of its vertical position in the image, considering the road flat at the level of the first reference (P1);
- determining on the image captured a number of pixels present between the first element (301) and the second element (302) of the first reference;
- deducing the width (1) of the road (203) from the number of pixels determined and the distance from the first reference;
- determining the width in pixels (lₚᵢₓₑₗₛ) of the road at the level of the second position (P2);
- considering the width of the road as constant between the first position (P1) and the second position (P2);
- deducing a real distance (dᵣₑₑₗ) from the width of the road determined in pixels;
- counting, in pixels, the height at which the second position is situated in the image captured;
- deducing from the preceding operation a theoretical distance (d_{théorique}) corresponding to the hypothesis of a flat road, between the second position (P2) and the vehicle (200); and
- deducing from a difference between the real distance (d_{réelle})¹ and the theoretical distance (d_{théorique}) the coefficient of the slope (θ) between a particular point (202) of the road, corresponding to the projection on the ground of the position of the camera (201) which equips the vehicle (200), and the second position (P2).
¹ Translator's note: This should be (d_{réel}) (as earlier on the page), since the corresponding noun "éloignement" is masculine, not feminine, i.e. this is a typing mistake.

8. Driving assistance device on board a vehicle (200), which can implement the method according to at least one of the preceding claims, comprising:
- a camera (201) which carries out an operation of acquisition of at least one image of a road scene (203) which exists in front of the said vehicle;
- image processing means in order to detect:
- a first reference (301; 302) which is present at the level of a first position (P1) and is constituted by at least a first element (301) and a second element (302) which are situated on both sides of the road (203) and in the vicinity of the vehicle (200), **characterised in that** it comprises:
- a second reference (303; 304) which is present at the level of a second position (P2) distant from the vehicle (200), of the same type as the first reference:
- calculation means, in order to calculate, if applicable, on the basis of characteristics of a change of orientation determined, between the first reference and the second reference, the coefficient (θ) of the slope (204; 404) between the second position (P2) and a particular point (202) of the road, the particular point corresponding to the projection on the ground of the position of the camera (201) which equips the vehicle; and
- means for controlling the orientation of a beam of light (402), or means for controlling the supply of the vehicle engine, the said control means interpreting the information of the coefficient of the slope (6) in order to adjust respectively the orientation of the beam and a fuel supply of the engine.

9. Motor vehicle (200), **characterised in that** it is equipped with the device according to claim 8.

## Patentansprüche

1. Verfahren zur automatischen Bestimmung des Neigungswinkels (θ) eines Hangs (204; 404), den ein Kraftfahrzeug (200) zu befahren in Begriff steht, das mit einer Kamera (201) ausgestattet ist, die wenigstens ein Bild von einem vor dem Fahrzeug liegenden Bereich der Straße (203) erfasst, das die folgenden unterschiedlichen Schritte umfasst:
- Erkennen einer ersten Markierung eines betrachteten Markierungstyps auf einem von der Kamera erfassten Bild, die eine allgemein längliche Form aufweist und sich längs der Straße wiederholt, wobei sich die erste Markierung in Höhe einer ersten Position (P1) befindet und von wenigstens einem ersten Element (301) und einem zweiten Element (302) gebildet ist, die sich beidseits der Straße und in der Nähe des Fahrzeugs befinden;
**dadurch gekennzeichnet, dass** es die Schritte umfasst:
- Erkennen einer zweiten Markierung des betrachteten Markierungstyps in größerer Entfernung zum Fahrzeug als die erste Markierung, wobei sich die zweite Markierung in Höhe einer zweiten Position (P2) beidseits der Straße (203) befindet;
- Ermitteln mit Hilfe eines Bildverarbeitungsprogramms, ob zwischen den Richtungen der Elemente (301; 302) der ersten Markierung und den Richtungen der Elemente (303; 304) der zweiten Markierung eine Richtungsänderung (305) besteht;
- gegebenenfalls Ableiten der Existenz eines Hangs (204) aus der festgestellten Richtungsänderung und Berechnen des Neigungswinkels (θ) des Hangs (204) basierend auf Eigenschaften der festgestellten Richtungsänderung.

2. Verfahren nach dem vorhergehenden Anspruch,
**dadurch gekennzeichnet, dass** der betrachtete Markierungstyp aus Bodenmarkierungen besteht.

3. Verfahren nach Anspruch 1,
**dadurch gekennzeichnet, dass** der betrachtete Markierungstyp aus Straßenrändern besteht.

4. Verfahren nach wenigstens einem der vorhergehenden Ansprüche,
**dadurch gekennzeichnet, dass** der Schritt zum Berechnen des Neigungswinkels (θ) des Hangs (204; 404) den Vorgang umfasst, die Straße (203) in Höhe der ersten Markierung (301; 302) als eben zu betrachten.

5. Verfahren nach wenigstens einem der vorhergehenden Ansprüche,
**dadurch gekennzeichnet, dass** der Schritt zum Berechnen des Neigungswinkels (θ) des Hangs (204; 404) den Vorgang umfasst, die Breite (1) der Straße zwischen der ersten Position (P1) und der zweiten Position (P2) als gleichbleibend zu betrachten.

6. Verfahren nach wenigstens einem der vorhergehenden Ansprüche,
**dadurch gekennzeichnet, dass** sich die zweite Position (P2) in einer für die Erkennung durch die Kamera (201) größtmöglichen Entfernung befindet.

7. Verfahren nach wenigstens einem der vorhergehenden Ansprüche,
**dadurch gekennzeichnet, dass** der Schritt zum Berechnen des Neigungswinkels (θ) des Hangs (204) die folgenden unterschiedlichen Schritte umfasst:
- Ermitteln der Entfernung der ersten Markierung anhand ihrer vertikalen Position im Bild, wobei die Straße in Höhe der ersten Markierung (P1) als eben betrachtet wird;
- Ermitteln einer Anzahl von Pixeln im erfassten Bild, die zwischen dem ersten Element (301) und dem zweiten Element (302) der ersten Markierung vorhanden sind;
- Ableiten der Breite (1) der Straße (203) aus der Anzahl ermittelter Pixel und der Entfernung der ersten Markierung;
- Ermitteln der Pixel-Breite (lₚᵢₓₑₗₛ) der Straße in Höhe der zweiten Position (P2);
- Betrachten der Straßenbreite als gleichbleibend zwischen der ersten Position (P1) und der zweiten Position (P2);
- Ableiten einer tatsächlichen Entfernung (dᵣₑₑₗ) aus der ermittelten Pixel-Breite der Straße;
- Berechnen der Höhe, in der sich die zweite Position befindet, im erfassten Bild in Pixeln;
- Ableiten einer theoretischen Entfernung (d_{theorique}), die der Annahme einer ebenen Straße entspricht, zwischen der zweiten Position (P2) und dem Fahrzeug (200) aus dem vorhergehenden Schritt;
- Ableiten des Hang-Neigungswinkels (θ) aus einer Differenz zwischen der tatsächlichen Entfernung (d_{réelle}) und der theoretischen Entfernung (d_{theorique}) zwischen einem bestimmten Punkt (202) der Straße, der der Projektion der Position der an Bod des Fahrzeugs (200) befindlichen Kamera (201) auf den Boden entspricht, und der zweiten Position (P2).

8. In einem Fahrzeug (200) eingebaute Fahrerassistenz-Vorrichtung, die das Verfahren nach wenigstens einem der vorhergehenden Ansprüche durchzuführen vermag, mit:
- einer Kamera (201) zum Erfassen wenigstens eines Bildes eines vor dem Fahrzeug liegenden Bereichs der Straße (203);
- Mitteln zur Bildverarbeitung zum Erkennen:
- einer ersten Markierung (301; 302), die sich in Höhe einer ersten Position (P1) befindet und von wenigstens einem ersten Element (301) und einem zweiten Element (302) gebildet ist, die sich beidseits der Straße (203) und in der Nähe des Fahrzeugs (200) befinden;
**dadurch gekennzeichnet, dass** sie umfasst:
- eine zweite Markierung (303; 304) vom gleichen Typ wie die erste Markierung, die sich in Höhe einer vom Fahrzeug (200) entfernten zweiten Position (P2) befindet;
- Berechnungsmittel zum Berechnen des Neigungswinkels (θ) des Hangs (204; 404) zwischen der zweiten Position (P2) und einem bestimmten Punkt (202) der Straße basierend auf Eigenschaften einer gegebenenfalls zwischen der ersten Markierung und der zweiten Markierung festgestellten Richtungsänderung, wobei der bestimmte Punkt der Projektion der Position der im Fahrzeug befindlichen Kamera (201) auf den Boden entspricht;
- Mitteln zum Steuern der Ausrichtung eines Lichtbündels (402) oder Mitteln zum Steuern der Versorgung des Fahrzeugmotors, wobei die Steuermittel die Daten des Hang-Neigungswinkels (θ) interpretieren, um die Ausrichtung des Lichtbündels bzw. die Kraftstoffversorgung des Motors anzupassen.

9. Kraftfahrzeug (200),
**dadurch gekennzeichnet, dass** es mit der Vorrichtung nach Anspruch 8 ausgestattet ist.
